(19) Europäisches Patentamt
European Patent Office
Office européen des brevets

(11) EP 1 729 168 A1

(12) **EUROPEAN PATENT APPLICATION**
published in accordance with Art. 158(3) EPC

(43) Date of publication:
**06.12.2006 Bulletin 2006/49**

(21) Application number: **05720575.9**

(22) Date of filing: **11.03.2005**

(51) Int Cl.:
*G02F 1/1339* (2006.01) *C09K 3/10* (2006.01)

(86) International application number:
**PCT/JP2005/004304**

(87) International publication number:
**WO 2005/091064 (29.09.2005 Gazette 2005/39)**

(84) Designated Contracting States:
**CH DE FR GB LI**

(30) Priority: **22.03.2004 JP 2004082895**

(71) Applicant: **NIPPON KAYAKU KABUSHIKI KAISHA**
**Tokyo 102-0071 (JP)**

(72) Inventors:
- **IMAIZUMI, Masahiro**
**Tokyo 1150052 (JP)**
- **OCHI, Naoyuki**
**Saitama-shi,**
**Saitama 3300835 (JP)**
- **ASANO, Toyofumi**
**Saitama-shi,**
**Saitama 3380001 (JP)**
- **NISHIHARA, Eiichi**
**Tokyo 1150042 (JP)**
- **HIRANO, Masahiro**
**Saitama 3620001 (JP)**
- **KOBAYASHI, Takumi**
**Asa-gun,**
**Yamaguchi 7570002 (JP)**

(74) Representative: **Gille Hrabal Struck Neidlein Prop Roos**
**Patentanwälte**
**Brucknerstrasse 20**
**40593 Düsseldorf (DE)**

# (54) SEALING MATERIAL FOR LIQUID CRYSTAL AND METHOD FOR PRODUCING SAME

(57) Disclosed is a sealing material for liquid crystals having high adhesion strength and excellent gap-forming power at bonding of panels. Also disclosed are a method for producing such a sealing material and a method for producing a liquid crystal display cell which is improved in productivity, high-speed response and reliability. The sealing material for liquid crystals is produced through a step wherein fine particles (D) having an average particle size of not more than 3 μm are dispersed, using a wet dispersion unit (A), in a reactive resin (C) having an epoxy group and/or a (meth)acryloyl group which resin has been dissolved in a solvent (B) and a following step wherein the solvent (B) is removed.

EP 1 729 168 A1

## Description

### Technical Field

The present invention relates to a sealing material for liquid crystals and a method for producing the same, and a liquid crystal display cell using the same. More specifically the present invention relates to a sealing material for liquid crystals produced by a method including a step for homogeneously dispersing organic and/or inorganic fine particles to a curable resin using a specific dispersing apparatus and method, and a method for producing the same.

### Background Art

In recent years, the gap narrowing of liquid crystal cells has been demanded in order to improve the high-speed response of liquid crystal display devices. Furthermore, due to the full-fledged expansion of uses in liquid crystal television sets and the like, the competition for the production of larger mother glass substrates has been tightening aiming at the production of larger panels and the improvement of productivity. Accompanying such market trends, gap narrowing, high adhesive strength and the like have been demanded as characteristics required in sealing materials for liquid crystals.
On the other hand, in order to make the process for producing a liquid crystal cell more efficient, a method combining photo curing and heat curing as curing means of the sealing material has been proposed (Japanese Patent No. 3162179, Patent Document 1). Furthermore, a method using photo curing or the combination of photo curing and heat curing as curing means of the sealing material in what is called a liquid crystal dropping method has been proposed (Japanese Patent Application Laying Open (KOKAI) No. 2001-133794, Patent Document 2). The liquid crystal dropping method is a method for producing a liquid crystal display cell having a sealed liquid crystal, wherein after dropping a liquid crystal inside the weir of the sealing material for liquid crystals formed on one substrate, the other substrate is bonded. Since cell bonding and liquid crystal sealing are simultaneously performed in the liquid crystal dropping method, the process can be simplified, and mass-productivity can be dramatically improved; therefore, the liquid crystal dropping method has begun to be adopted and put into practical use as a method for sealing a liquid crystal in a liquid crystal display cell associated with the production of larger liquid crystal panels. At present, as a sealing material for liquid crystals suited for this method, a sealing material of the type curable by a light-heat combination process wherein after performing temporary curing by light irradiation, post-curing is performed by heat has become mainstream.
In conventional thermosetting sealing material for liquid crystals, the use of a process wherein a solvent is admixed to impart dispensing and printing properties and the solvent is dried during the cell forming process, hereinafter called "pre-curing step," is a general practice. However, in the sealing material for liquid crystals to be used in a light-heat combination process, since it is difficult to consider the use of a pre-curing step in the design of the sealing material, it is common to use no solvents.
Although it is generally known that inorganic fillers, fine rubber particles or the like are compounded to improve the adhesive strength of these sealing materials for liquid crystals to a practical level, examples of the mixing and dispersing methods therefor conventionally include only mixing and dispersing methods using a three-roll mill, a paint roll or the like. (Patent Document 1 and Japanese Patent No. 3366203, Patent Document 3)
[Patent Document 1]: Japanese Patent No. 3162179
[Patent Document 2]: Japanese Patent Application Laying Open (KOKAI) No. 2001-133794
[Patent Document 3]: Japanese Patent No. 3366203

### Disclosure of the Invention

The task of the present invention is to develop a sealing material for liquid crystals, particularly to develop a sealing material for liquid crystals used for producing a liquid crystal display device by a liquid crystal dropping method wherein after dropping a liquid crystal inside the weir of a sealing material for liquid crystals formed on one substrate, the other substrate is bonded, and after irradiating light onto the sealing portion for liquid crystals, it is heated and cured. In more detail, the task of the present invention is to propose a sealing material for liquid crystals that is suitable for producing a narrow-gap liquid crystal cell, and excels in adhesive strength.
As a result of the present inventors' keen repetitive studies to accomplish the above-described task, the present invention was completed.
Specifically, the present invention relates to:

(1) A sealing material for liquid crystals produced by homogeneously dispersing fine particles (D) having an average particle size of not more than 3 μm in a reactive resin (C) having an epoxy group and/or a (meth)acryloyl group dissolved in a solvent (B) using a wet dispersion unit (A) in which a dispersion vessel (a) contains media (b) as dispersing media and a rapidly rotating stirrer (c) disperses agglomerated particles by allowing the media to collide

each other in a high-speed rotating field; and then removing the solvent (B).

(2) The sealing material for liquid crystals according to the above-described (1), wherein the wet dispersion unit (A) is of a continuous processing system.

(3) The sealing material for liquid crystals according to the above-described (1) or (2), wherein said media (b) has a diameter of 0.1 to 5 mm each, and is made of any material selected from alumina, zirconia, zirconia-reinforced alumina, and silicon nitride.

(4) The sealing material for liquid crystals according to any of the above-described (1) to (3), wherein the fine particles (D) has an average particle size of not more than 0.3 μm.

(5) The sealing material for liquid crystals according to any of the above-described (1) to (4), wherein the fine particles (D) are inorganic fine particles (D-1).

(6) The sealing material for liquid crystals according to the above-described (5), wherein the inorganic fine particles (D-1) are made of silica and/or alumina and/or titanium black pigment.

(7) The sealing material for liquid crystals according to any of the above-described (1) to (6), wherein the fine particles (D) are organic fine particles (D-2).

(8) The sealing material for liquid crystals according to the above-described (7), wherein the organic fine particles (D-2) are cross-linked rubber fine particles.

(9) The sealing material for liquid crystals according to the above-described (8), wherein the cross-linked rubber fine particles are cross-linked rubber fine particles having a core-shell structure.

(10) The sealing material for liquid crystals according to any of the above-described (1) to (9), which is obtained by further adding any one or more of additives selected from the group consisting of a curing agent, a curing promoter, a photopolymerization initiator, a polymerization inhibitor, a coupling agent, an ion scavenger, and an antioxidant, and then dispersing, and/or adding one or more of said additives after removing the solvent (B).

(11) A method for producing a sealing material for liquid crystals, characterized by comprising homogeneously dispersing fine particles (D) having an average particle size of not more than 3 μm in a reactive resin (C) having an epoxy group and/or a (meth)acryloyl group dissolved in a solvent (B) using a wet dispersion unit (A) in which a dispersion vessel (a) contains media (b) as dispersing media and a rapidly rotating stirrer (c) disperses agglomerated particles by allowing the media to collide each other in a high-speed rotating field; and then removing the solvent (B).

(12) A liquid crystal display cell sealed with a cured product of the sealing material for liquid crystals according to any of the above-described (1) to (10).

(13) A method for producing a liquid crystal display cell composed of two substrates characterized by comprising adding a liquid crystal dropwise inside the weir of the sealing material for liquid crystals according to any of the above-described (1) to (10) formed on one substrate, bonding the other substrate, and then curing the sealing material by light and/or heat.

(14) A method for producing a liquid crystal display cell composed of two substrates, characterized by comprising bonding two substrates with the sealing material for liquid crystals according to any of the above-described (1) to (10), curing the sealing material by light and/or heat to form a cell, injecting a liquid crystal, and then sealing an injecting port with an end sealing material.

Best Mode for Carrying Out the Invention

Hereafter, the present invention will be described in detail.

The wet dispersion unit (A) used in the present invention is not specifically limited as long as it is equipped with a dispersion vessel (a), media (b), and a rapidly rotating stirrer (c), and can allow the media themselves to collide in a rapidly rotating field to disperse agglomerated particles. For example, commercially available generically termed bead mills, ball mills, or sand mills can be used. Processing forms can be either a batch system or a continuous processing system. It is preferable that the dispersion vessel (a) can circulate a cooling medium in the jacket to prevent temperature rising during the dispersing process. Examples of the material of the media include those selected from alumina, zirconia, zirconia-reinforced alumina, silicon nitride and the like. The shape of the media is normally spherical, and although the diameter thereof is not specifically limited, it is about 0.1 to 5 mm, preferably about 0.3 to 3 mm. Although rapidly rotating stirrer (c) is not specifically limited, examples include a system to rotate agitating blades in a dispersion vessel, and a system to rotate a dispersion vessel at a high speed.

The solvent (B) is not specifically limited as long as it has no reactivity with the reactive resin (C) having epoxy groups and/or (meth)acryloyl groups, which is the objects of fine particle (D) dispersion. Solvents having no problems in safety and easy to remove can be suitably selected. Examples of usable solvents include benzene, toluene, xylene, methyl ethyl ketone, cyclohexanone, and propylene glycol monomethyl ether.

Although reactive resin (C) having epoxy groups and/or (meth)acryloyl groups is not specifically limited, examples include multifunctional epoxy resins, such as bisphenol A type epoxy resin, bisphenol F type epoxy resin, bisphenol S type epoxy resin, phenol novolak type epoxy resin, and cresol novolak type epoxy resin; and epoxy (meth)acrylate thereof. It is preferable to select the resin having low solubility to a liquid crystal in view of contamination to the liquid crystal, examples of such resins include the polymer of resorcinol diglycidyl ether represented by the following general formula (1) and epoxy acrylate of bisphenol F type epoxy resin.

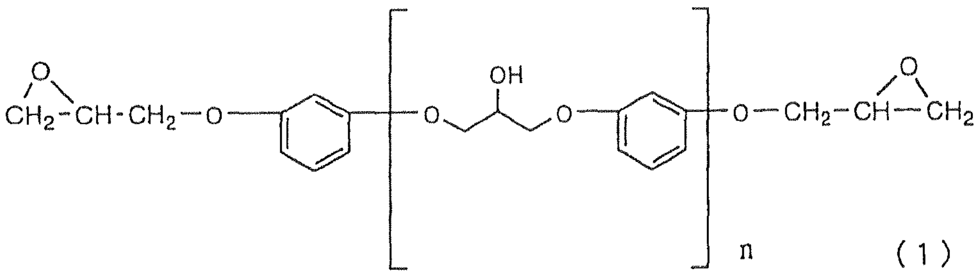

(1)

(where n represents a positive number from 1 to 10.)

The fine particles (D) having an average particle size of not more than 3 μm used in the present invention are added for the purpose of imparting material strength, adhesive strength, stress relaxation properties and the like to the sealing material for liquid crystals. It is further preferable that the fine particles (D) have an average particle size of not more than 0.3 μm from the standpoint of cell gap formation, material strength, adhesive strength and the like, and the lower limit thereof is about 0.003 μm as an average particle size. The fine particles (D) can be either inorganic fine particles or organic fine particles. Examples of inorganic fine particles include fused silica, crystalline silica, silicon carbide, silicon nitride, boron nitride, calcium carbonate, magnesium carbonate, barium sulfate, calcium sulfate, mica, talc, clay, alumina, magnesium oxide, zirconium oxide, aluminum hydroxide, magnesium hydroxide, calcium silicate, aluminum silicate, lithium aluminum silicate, zirconium silicate, barium titanate, glass fibers, carbon fibers, molybdenum disulfide, asbestos, and titanium black pigments; and silica, alumina, and titanium black pigments are preferable although not limited thereto. Examples of organic fine particles include fine particles of cross-linked resin and fine particles of cross-linked rubber, and fine particles of cross-linked rubber having a core-shell structure are preferable from the viewpoint of adhesive strength improvement and stress relaxation although not limited thereto. The cross-linked rubber having a core-shell structure used in the present invention is not specifically limited as long as it is a cross-linked rubber having a two-layer or three-layer structure wherein the core layer is a cross-linked rubber exerting rubber elasticity and the core layer is coated with a cross-linked polymer not exerting rubber elasticity. As the core layer, cross-linked polybutadiene, cross-linked alkyl acrylate copolymers, and cross-linked polyisoprene can be used; and as the shell layer, alkyl acrylate-alkyl methacrylate copolymers, alkyl methacrylate-styrene copolymers, or alkyl acrylate copolymers can be used. Among these, preferable combinations of the core layer and the shell layer are the combination of the core layer composed of cross-linked polybutadiene and the shell layer composed of an alkyl acrylate-alkyl methacrylate copolymer or alkyl methacrylate-styrene copolymer, and the combination of the core layer composed of a cross-linked alkyl acrylate copolymer and the shell layer composed of an alkyl acrylate copolymer. As the cross-linked rubber having a core-shell structure, Paraloid EXL-2602 (manufactured by Kureha Corporation), Paraloid EXL-2655 (manufactured by Kureha Corporation), and the like are commercially available. The combination of two or more kinds of these fine particles can also be used.

In the sealing material for liquid crystals of the present invention, other components, such as a curing agent, a curing promoter, a filler, a photopolymerization initiator, a polymerization inhibitor, a coupling agent, an ion scavenger, an antioxidant and the like can be compounded.

Although usable heat curing agents are not specifically limited as long as they react with an epoxy resin to form a cured product, examples thereof include aliphatic dibasic acid dihydrazides composed of fatty acid skeletons, such as oxalic acid dihydrazide, malonic acid dihydrazide, succinic acid dihydrazide, adipic acid dihydrazide, adipic acid dihydrazide, pimelic acid dihydrazide, suberic acid dihydrazide, azelaic acid dihydrazide, sebacic acid dihydrazide, dodecanedioic acid dihydrazide, hexadecanoic acid dihydrazide, maleic acid dihydrazide, fumaric acid dihydrazide, diglycolic acid dihydrazide, tartaric acid dihydrazide, and malic acid dihydrazide; aromatic polyhydric acid hydrazides, such as isophthalic acid dihydrazide, terephthalic acid dihydrazide, 2,6-naphthalenedicarboxylic acid dihydrazide, 4,4'-bisbenzenecarboxylic acid dihydrazide, 1,4-naphthalenedicarboxylic acid dihydrazide, 2,6-pyridinedicarboxylic acid dihydrazide, 1,2,4-benzenetricarboxylic acid trihydrazide, pyromellitic acid tetrahydrazide, and 1,4,5,8-naphthalenetetracarboxylic acid tetrahydrazide; dihydrazides having valine hydantoin skeletons, such as 1,3-bis (hydrazinocarbonoethyl)-5-isopropyl hydantoin; and polyphenols.

Examples of usable curing promoters include imidazoles; the salts of imidazoles and polyhydric carboxylic acid, such as phthalic acid, isophthalic acid, terephthalic acid, trimellitic acid, pyromellitic acid, naphthalene dicarboxylic

acid, maleic acid, and oxalic acid; amides, such as dicyandiamide, and the salts of the amides and phenols, the above-described polyhydric carboxylic acids, or phosphinic acid; diaza compounds, such as 1,8-diazacyclo [5.4.0] undecene-7, and the salts of the diaza compounds and phenols, the above-described polyhydric carboxylic acids, or phosphinic acid; phosphines, such as triphenylphosphine and tetraphenylphosphonium tetraphenyl borate; phenols, such as 2,4,6-tris(aminomethyl)phenol; and amine adducts.

The usable fillers are not specifically limited, and examples thereof include fused silica, crystalline silica, silicon carbide, silicon nitride, boron nitride, calcium carbonate, magnesium carbonate, barium sulfate, calcium sulfate, mica, talc, clay, alumina, magnesium oxide, zirconium oxide, aluminum hydroxide, magnesium hydroxide, calcium silicate, aluminum silicate, lithium aluminum silicate, zirconium silicate, barium titanate, glass fibers, carbon fibers, molybdenum disulfide, and asbestos; preferably, fused silica, crystalline silica, silicon nitride, boron nitride, calcium carbonate, barium sulfate, calcium sulfate, mica, talc, clay, alumina, aluminum hydroxide, calcium silicate, and aluminum silicate; and more preferably fused silica, crystalline silica, alumina, and talc. The above-described fillers can be used in combination of two or more kinds. The average particle size of these fillers is preferably not more than 3 $\mu$m. If the average particle size is more than 3 $\mu$m, there is possibility that the gap cannot be adequately formed when upper and lower glass substrates are bonded in the production of a liquid crystal cell.

The usable polymerization inhibitors are not specifically limited, and examples thereof include methoquinone, hydroquinone, methyl hydroquinone, phenothiazine, and dibutylhydroxytoluene. The quantity thereof used for the reaction material mixture is preferably 0.01 to 1% by weight, particularly preferably 0.05 to 0.5% by weight.

The usable photopolymerization initiators are preferably radical generation type photopolymerization initiators having sensitivity in the vicinity of i-line (365 nm) that has relatively small effects on the characteristics of the liquid crystal, and having low liquid crystal contamination. Examples of usable radical generation type photopolymerization initiators include benzil dimethyl ketal, 1-hydroxycyclohexyl phenyl ketone, diethylthioxanthone, benzophenone, 2-ethylanthraquinone, 2-hydroxy-2-methylpropiophenone, 2-methyl-[4-(methylthio)phenyl]-2-morpholino-1-propane, 2,4,6-trimethylbenzoyldiphenylphosphine oxide, 3,6-bis(2-methyl-2-morpholinopropionyl)-9-n-octylcarbazole, and 1,7-bis(9-acridinyl)heptane, preferably, carbazole photopolymerization initiators such as 3,6-bis (2-methyl-2-moipholinopropionyl)-9-n-octylcarbazole; and acridine photopolymerization initiators such as 1,7-bis(9-acridinyl)heptane.

In the sealing material for liquid crystals of the present invention, a silane coupling agent can be used to improve the adhesive strength. Examples of usable silane coupling agents include silane coupling agents, such as 3-glycidoxypropyltrimethoxysilane, 3-glycidoxypropylmethyldimethoxysilane, 3-glycidoxypropylmethyldimethoxysilane, 2-(3,4-epoxycyclohexyl)ethyltrimethoxysilane, N-phenyl-$\gamma$-aminopropyltrimethoxysilane, N-(2-aminoethyl)-3-aminopropylmethyldimethoxysilane, N-(2-aminoethyl)-3-aminopropyltrimethoxysilane, 3-aminopropyltriethoxysilane, 3-mercaptopropyltrimethoxysilane, vinyltrimethoxysilane, N-(2-(vinylbenzylamino)ethyl)-3-aminopropyltrimethoxysilane hydrochloride, 3-methacryloxypropyltrimethoxysilane, 3-chloropropylmethyldimethoxysilane, and 3-chloropropyltrimethoxysilane. These silane coupling agents can be used in combination of two or more kinds. Among these, in order to achieve higher adhesive strength, it is preferable that the silane coupling agent is a silane coupling agent having amino groups. By using the silane coupling agent, a sealing material for liquid crystals having an improved adhesive strength and excellent moisture resistant reliability can be obtained.

The sealing material for liquid crystals of the present invention can further contain an ion scavenger as required. Since the ion scavenger adsorbs and fixes impurity inorganic ions in the sealing material for liquid crystals to reduce inorganic ions seeping into the liquid crystal, the addition of the ion scavenger has the effect of preventing the lowering of resistivity of the liquid crystal. As the ion scavenger, an inorganic compound having ion trapping ability is preferable. The ion trapping ability termed herein is the ability to trap phosphoric acid, phosphorous acid and organic acid anions, halogen anions, alkali metal cations, alkaline earth metal cations and the like to reduce ionic impurities. Examples of usable ion scavengers include a bismuth oxide ion scavenger represented by the general formula, $BiO_X(OH)_Y(NO_3)_Z$ (where X , Y and Z are positive numbers of 0.9 to 1.1, 0.6 to 0.8 and 0.2 to 0.4, respectively), an antimony oxide ion scavenger, a titanium phosphate ion scavenger, a zirconium phosphate ion scavenger, and a hydrotalcite ion scavenger represented by the general formula, $Mg_XAl_Y(OH)_{2X+3Y-2Z}(CO_3)_Z \cdot mH_2O$ (where each of X, Y and Z are positive numbers satisfying $2X + 3Y - 2Z \geq 0$, m is a positive number). These ion scavengers are marketed as IXE-100 (manufactured by Toagosei Co., Ltd., zirconium phosphate ion scavenger), IXE-300 (manufactured by Toagosei Co., Ltd., antimony oxide ion scavenger), IXE-400 (manufactured by Toagosei Co., Ltd., titanium phosphate ion scavenger), IXE-500 (manufactured by Toagosei Co., Ltd., bismuth oxide ion scavenger), IXE-600 (manufactured by Toagosei Co., Ltd., antimony oxide-bismuth oxide ion scavenger), and DHT-4A (hydrotalcite ion scavenger, manufactured by Kyowa Chemical Industry Co., Ltd.), Kyoward KW-2000 (hydrotalcite ion scavenger, manufactured by Kyowa Chemical Industry Co., Ltd.). These can be used alone or in combination of two or more kinds. The ion scavenger is preferably used in the composition of the sealing material for liquid crystals in a percentage of normally 0.01 to 5% by weight.

To obtain the sealing material for liquid crystals of the present invention, after preliminarily mixing the above-described components (B), (C) and (D), and other components as required in a conventional mixer, dispersion treatment is performed using a wet dispersion unit (A) until agglomerates of fine particles (D) are no longer observed. Then, the

solvent (B) is removed, and other components are added as required. To remove foreign substances, filtration treatment can be performed. The presence of agglomerates of fine particles (D) in the dispersed mixture and the degree thereof can be easily checked using an optical microscope (magnification of about 500). Therefore, by performing proper dispersion treatment until agglomerates of fine particles are no longer observed, the dispersion treatment step free of agglomerated particles to meet the object of the present invention can be achieved.

One embodiment of the liquid crystal display cell of the present invention is a liquid crystal display cell composed of a pair of substrates equipped with predetermined electrodes, formed by dropping a liquid crystal inside the weir of the sealing material for liquid crystals of the present invention formed on one substrate, bonding the other substrate to form a gap, and then curing the sealing material by light and/or heat. Another embodiment of the liquid crystal display cell of the present invention is a liquid crystal display cell composed of a pair of substrates equipped with predetermined electrodes, formed by bonding the pair of substrates with the sealing material of the present invention to form a gap, curing the sealing material by light and/or heat to form a cell, injecting a liquid crystal, and then sealing the injecting port with an end sealing material.

Since the fine particle components in the sealing material for liquid crystals of the present invention are homogeneously dispersed, no defects due to the presence of agglomerates larger than the cell gap during gap formation occur. The kinds of liquid crystal sealed in the cell are not specifically limited. Here, the substrates are composed of a combination of substrates consisting of glass, quartz, plastics, silicon or the like, wherein at least one has optical transparency. In the method for the production, after adding a spacer (gap controlling material) such as glass fibers to, for example, the sealing material for liquid crystals of the present invention, the sealing material for liquid crystals is applied onto one of the pair of substrates in a weir shape using a dispenser or the like, the liquid crystal is dropped inside the weir of the sealing material for liquid crystals, and the other glass substrate is overlaid in a vacuum to form a gap. After forming the gap, ultraviolet beams are irradiated onto the liquid crystal sealing portion using an ultraviolet applicator to cause photo curing of the sealing material. The dose of ultraviolet irradiation is normally 500 $mJ/cm^2$ to 6000 $mJ/cm^2$, preferably 1000 $mJ/cm^2$ to 4000 $mJ/cm^2$. Thereafter, by curing at 90 to 130˚C for 1 to 2 hours, the liquid crystal display cell of the present invention can be obtained. Examples of the spacers include glass fibers, silica beads and polymer beads.

The sealing material for liquid crystals of the present invention is suited for producing a narrow-gap liquid crystal cell, and excels in adhesive strength. By using the sealing material for liquid crystals of the present invention, a liquid crystal cell designed to have a narrow gap has been able to produce.

Examples

The present invention will be described in further detail referring to examples shown below.

(Example 1)

After preliminarily mixing 30 parts by weight of an epoxy resin DRGE (manufactured by Nippon Kayaku Co., Ltd.; resorcinol diglycidyl ether multimer), 120 parts by weight of an epoxy acrylate resin R-94100 (manufactured by Nippon Kayaku Co., Ltd.; epoxy acrylate of a bisphenol-F-type epoxy resin), 35 parts by weight of fused and crushed silica (Crystalite 1FF, manufactured by Tatsumori Co., Ltd., average particle size: 1,0 μm), 5 parts by weight of a cross-linked rubber of a core-shell structure (Paralloid EXL-2655, manufactured by Kureha Chemical Industry Co., Ltd., core layer: cross-linked polybutadiene, shell layer: alkyl methacrylate-styrene copolymer, average particle size: 200 nm), and 60 parts by weight of propyleneglycol monomethyl ether as the solvent using a planetary mixer (manufactured by Asada Iron Works Co., Ltd., PVM-50), dispersion treatment was performed using a continuous system sand mill (manufactured by Asada Iron Works Co., Ltd., GMH-L) using media (alumina, diameter: 1 mm). When the dispersion after repeating 20 times of the treatment was sandwiched between glass plates and observed through a microscope, the absence of agglomerates was confirmed. Then, to the dispersion-treated liquid from which the solvent was removed, 1.8 parts by weight of a radical generation type photopolymerization initiator, 3,6-bis (2-methyl-2-morpholinopropionyl)-9-n-octyl carbazole (manufactured by Adeka Corporation, Adeka Optomer N-1414), and 0.5 parts by weight of an aminosilane coupling agent (N-(β-aminoethyl)-γ-aminopropyl trimethoxysilane, manufactured by Shin-Etsu Silicone, KBM-603) were added, and after mixing 15 parts by weight of isophthalic acid dihydrazide (trade name: IDH-S, manufactured by Otsuka Chemical Co., Ltd., jet-mill ground grade further pulverized with a jet mill, melting point: 224˚C, active hydrogen equivalent: 48.5 g/eq, average particle size 1.3 μm), the mixture was stirred, defoamed and filtered to obtain the sealing material for liquid crystals of the present invention.

(Example 2)

After preliminarily mixing 30 parts by weight of an epoxy resin DRGE (manufactured by Nippon Kayaku Co.,

Ltd.; resorcinol diglycidyl ether multimer), 120 parts by weight of an epoxy acrylate resin R-94100 (manufactured by Nippon Kayaku Co., Ltd.; epoxy acrylate of a bisphenol-F-type epoxy resin), 35 parts by weight of alumina (SPC-Al, manufactured by C. I. Kasei Co., Ltd., average particle size 0.05 μm), 5 parts by weight of a cross-linked rubber of a core-shell structure (Paralloid EXL-2655, manufactured by Kureha Chemical Industry Co., Ltd., core layer: cross-linked polybutadiene, shell layer: alkyl methacrylate-styrene copolymer, average particle size: 200 nm), and 60 parts by weight of propyleneglycol monomethyl ether as the solvent using a planetary mixer (manufactured by Asada Iron Works Co., Ltd., PVM-50), dispersion treatment was performed using a continuous system sand mill (manufactured by Asada Iron Works Co., Ltd., GMH-L) using media (alumina, diameter: 1 mm). When the dispersion after repeating 20 times of the treatment was sandwiched between glass plates and observed through a microscope, the absence of agglomerates was confirmed. Then, to the dispersion-treated liquid from which the solvent was removed, 1.8 parts by weight of a radical generation type photopolymerization initiator, 3,6-bis (2-methyl-2-morpholinopropionyl)-9-n-octyl carbazole (manufactured by Adeka Corporation, Adeka Optomer N-1414), and 0.5 parts by weight of an aminosilane coupling agent (N-(β-aminoethyl)-γ-aminopropyl trimethoxysilane, manufactured by Shin-Etsu Silicone, KBM-603) were added, and after mixing 15 parts by weight of isophthalic acid dihydrazide (trade name: IDH-S, manufactured by Otsuka Chemical Co., Ltd., jet-mill ground grade further pulverized with a jet mill, melting point: 224°C, active hydrogen equivalent: 48.5 g/eq, average particle size 1.3 μm), the mixture was stirred, defoamed and filtered to obtain the sealing material for liquid crystals of the present invention.

(Example 3)

After preliminarily mixing 20 parts by weight of an epoxy resin RE-203 (manufactured by Nippon Kayaku Co., Ltd.; diglycidyl ether of ethylene oxide-added bisphenol S), 80 parts by weight of an epoxy acrylate resin R-94100 (manufactured by Nippon Kayaku Co., Ltd.; epoxy acrylate of a bisphenol-F-type epoxy resin), 25 parts by weight of titanium black pigment (Titanium Black 13R, manufactured by Mitsubishi Materials Corporation, average particle size 73 nm), 5.8 parts by weight of a cross-linked rubber of a core-shell structure (Paralloid EXL-2655, manufactured by Kureha Chemical Industry Co., Ltd., core layer: cross-linked polybutadiene, shell layer: alkyl methacrylate-styrene copolymer, average particle size: 200 nm), and 60 parts by weight of propyleneglycol monomethyl ether as the solvent using a planetary mixer (manufactured by Asada Iron Works Co., Ltd., PVM-50), dispersion treatment was performed using a continuous system sand mill (manufactured by Asada Iron Works Co., Ltd., GMH-L) using media (alumina, diameter: 1 mm). When the dispersion after repeating 20 times of the treatment was sandwiched between glass plates and observed through a microscope, the absence of agglomerates was confirmed. Then, to the dispersion-treated liquid from which the solvent was removed, 3.6 parts by weight of a radical generation type photopolymerization initiator, 3,6-bis (2-methyl-2-morpholinopropionyl)-9-n-octyl carbazole (manufactured by Adeka Corporation, Adeka Optomer N-1414), and 0.2 parts by weight of an aminosilane coupling agent (N-(β-aminoethyl)-γ-aminopropyl trimethoxysilane, manufactured by Shin-Etsu Silicone, KBM-603) were added, and after mixing 13.5 parts by weight of adipic acid dihydrazide (trade name: ADH-S, manufactured by Otsuka Chemical Co., Ltd., jet-mill ground grade further pulverized with a jet mill, melting point: 190°C, active hydrogen equivalent: 43.5 g/eq, average particle size 1.3 μm), the mixture was stirred, defoamed and filtered to obtain the sealing material for liquid crystals of the present invention.

(Comparative Example 1)

After preliminarily mixing 30 parts by weight of an epoxy resin DRGE (manufactured by Nippon Kayaku Co., Ltd.; resorcinol diglycidyl ether multimer), 120 parts by weight of an epoxy acrylate resin R-94100 (manufactured by Nippon Kayaku Co., Ltd.; epoxy acrylate of a bisphenol-F-type epoxy resin), 35 parts by weight of fused and crushed silica (Crystalite 1FF, manufactured by Tatsumori Co., Ltd., average particle size: 1,0 μm), and 5 parts by weight of a cross-linked rubber of a core-shell structure (Paralloid EXL-2655, manufactured by Kureha Chemical Industry Co., Ltd., core layer: cross-linked polybutadiene, shell layer: alkyl methacrylate-styrene copolymer, average particle size: 200 nm), using a planetary mixer, dispersion treatment was performed using a three-roll mill (manufactured by Noritake Co., Ltd.). When the dispersion after repeating 20 times of the treatment was sandwiched between glass plates and observed through a microscope, minute agglomerates were found. Then, to the dispersion-treated liquid, 1.8 parts by weight of a radical generation type photopolymerization initiator, 3,6-bis (2-methyl-2-morpholinopropionyl)-9-n-octyl carbazole (manufactured by Adeka Corporation, Adeka Optomer N-1414), and 0.5 parts by weight of an aminosilane coupling agent (N-(β-aminoethyl)-γ-aminopropyl trimethoxysilane, manufactured by Shin-Etsu Silicone, KBM-603) were added, and after mixing 15 parts by weight of isophthalic acid dihydrazide (trade name: IDH-S, manufactured by Otsuka Chemical Co., Ltd., jet-mill ground grade further pulverized with a jet mill, melting point: 224°C, active hydrogen equivalent: 48.5 g/eq, average particle size 1.3 μm), the mixture was stirred, defoamed and filtered to obtain the sealing material for liquid crystals.

(Comparative Example 2)

After preliminarily mixing 30 parts by weight of an epoxy resin DRGE (manufactured by Nippon Kayaku Co., Ltd.; resorcinol diglycidyl ether multimer), 120 parts by weight of an epoxy acrylate resin R-94100 (manufactured by Nippon Kayaku Co., Ltd.; epoxy acrylate of a bisphenol-F-type epoxy resin), 35 parts by weight of alumina (SPC-Al, manufactured by C. I. Kasei Co., Ltd., average particle size 0.05 μm), and 5 parts by weight of a cross-linked rubber of a core-shell structure (Paralloid EXL-2655, manufactured by Kureha Chemical Industry Co., Ltd., core layer: cross-linked polybutadiene, shell layer: alkyl methacrylate-styrene copolymer, average particle size: 200 nm), using a planetary mixer, dispersion treatment was performed using a three-roll mill (manufactured by Noritake Co., Ltd.). When the dispersion after repeating 20 times of the treatment was sandwiched between glass plates and observed through a microscope, the minute agglomerates were found. Then, to the dispersion-treated liquid, 1.8 parts by weight of a radical generation type photopolymerization initiator, 3,6-bis (2-methyl-2-morpholinopropionyl)-9-n-octyl carbazole (manufactured by Adeka Corporation, Adeka Optomer N-1414), and 0.5 parts by weight of an aminosilane coupling agent (N-(β-aminoethyl)-γ-aminopropyl trimethoxysilane, manufactured by Shin-Etsu Silicone, KBM-603) were added, and after mixing 15 parts by weight of isophthalic acid dihydrazide (trade name: IDH-S, manufactured by Otsuka Chemical Co., Ltd., jet-mill ground grade further pulverized with a jet mill, melting point: 224°C, active hydrogen equivalent: 48.5 g/eq, average particle size 1.3 μm), the mixture was stirred, defoamed and filtered to obtain the sealing material for liquid crystals.

(Test Examples)

Vertical adhesive strength

To 100 g of the obtained sealing material for liquid crystals, 1 g of glass fibers having a diameter of 5 μm was added as a spacer, and mixed and stirred. The sealing material was applied onto a glass substrate (15 mm × 30 mm × 0.7 mm thick) using a needle at room temperature, the glass substrate was bonded to another glass substrate so as to intersect and weakly pressed, and fixed using a binder clip. After irradiating 3000 mJ/cm$^2$ of ultraviolet beams from a UV irradiator, the substrate was placed in an oven at 120°C for 1 hour to cure. The diameter of the bonded surface was measured with a microscope to calculate the area of the bonded surface. The diameter of the sample for measurement was made to be within the range between 0.8 μm and 1.2 μm. The sample for measurement was fixed with a jig, the stretching speed was set to about 20 mm/min, and the facing substrate was stretched in the vertical direction to measure the peeling strength. The vertical adhesive strength was calculated using the following equation.

$$\text{Vertical adhesive strength (MPa)} = \text{Peeling strength (N)} / \text{Sealing area (mm}^2\text{)}$$

The measurements were performed 10 times, and the mean value was taken as the vertical adhesive strength of the sealing material.

The results of examples and comparative examples are shown in Table 1. Gap formation test

To 100 g of the obtained sealing material for liquid crystals, 1 g of glass fibers was added as a spacer, and mixed and stirred. The sealing material was applied onto a glass substrate (15 mm × 30 mm × 0.7 mm thick) using a needle at room temperature, the glass substrate was bonded to another glass substrate so as to intersect and weakly pressed, and fixed using a binder clip. After irradiating 3000 mJ/cm$^2$ of ultraviolet beams from a UV irradiator, the substrate was placed in an oven at 120°C for 1 hour to cure, the bonded surface was observed through a microscope. When the sealing material was collapsed to the diameter of the spacer and a desired gap was formed, the spacer contacts the glass substrate and was clearly visible (evaluated as ○); however, when the sealing material was not collapsed to the diameter of the spacer and a desired gap was not formed, the spacer was invisible (evaluated as ×).

Spacers having diameters of 5 μm and 2 μm were observed, respectively.

The results of examples and comparative examples are shown in Table 1.

Table 1

| | Example 1 | Example 2 | Example 3 | Comparative Example 1 | Comparative Example 2 |
|---|---|---|---|---|---|
| Vertical adhesive strength (MPa) | 17 | 20 | 20 | 3 | 3 |
| Gap formation test | | | | | |
| 5 μm | ○ | ○ | ○ | × | × |
| 2 μm | ○ | ○ | ○ | × | × |

As is obvious from Table 1, Examples 1 to 3 produced by the producing method of the present invention excel in adhesive strength and gap-forming ability; however, Comparative Examples 1 and 2 produced by different methods are significantly inferior is these required properties even though the compositions are identical. This is considered because the inorganic filler and the rubber particles, which are dispersed components, are not homogeneously dispersed.

Industrial Applicability

The sealing material for liquid crystals of the present invention excels in workability for applying to the substrates and bonding property, and excels in adhesive strength and gap-forming ability. By using the sealing material for liquid crystals of the present invention in the liquid crystal dropping method, a liquid crystal display cell having improved high-speed response and reliability can be produced.

## Claims

1. A sealing material for liquid crystals produced by homogeneously dispersing fine particles (D) having an average particle size of not more than 3 μm in a reactive resin (C) having an epoxy group and/or a (meth)acryloyl group dissolved in a solvent (B) using a wet dispersion unit (A) in which a dispersion vessel (a) contains media (b) as dispersing media and a rapidly rotating stirrer (c) disperses agglomerated particles by allowing the media to collide each other in a high-speed rotating field; and then removing the solvent (B).

2. The sealing material for liquid crystals according to claim 1, wherein the wet dispersion unit (A) is of a continuous processing system.

3. The sealing material for liquid crystals according to claim 1 or 2, wherein said media (b) has a diameter of 0.1 to 5 mm each, and is made of any material selected from alumina, zirconia, zirconia-reinforced alumina, and silicon nitride.

4. The sealing material for liquid crystals according to any of claims 1 to 3, wherein the fine particles (D) has an average particle size of not more than 0.3 μm.

5. The sealing material for liquid crystals according to any of claims 1 to 4, wherein the fine particles (D) are inorganic fine particles (D-1).

6. The sealing material for liquid crystals according to claim 5, wherein the inorganic fine particles (D-1) are made of silica and/or alumina and/or titanium black pigment.

7. The sealing material for liquid crystals according to any of claims 1 to 6, wherein the fine particles (D) are organic fine particles (D-2).

8. The sealing material for liquid crystals according to claim 7, wherein the organic fine particles (D-2) are cross-linked rubber fine particles.

9. The sealing material for liquid crystals according to claim 8, wherein the cross-linked rubber fine particles are cross-linked rubber fine particles having a core-shell structure.

10. The sealing material for liquid crystals according to any of claims 1 to 9, which is obtained by further adding any one or more of additives selected from the group consisting of a curing agent, a curing promoter, a photopolymerization initiator, a polymerization inhibitor, a coupling agent, an ion scavenger, and an antioxidant, and then dispersing, and/or adding one or more of said additives after removing the solvent (B).

11. A method for producing a sealing material for liquid crystals, **characterized by** comprising homogeneously dispersing fine particles (D) having an average particle size of not more than 3 μm in a reactive resin (C) having an epoxy group and/or a (meth)acryloyl group dissolved in a solvent (B) using a wet dispersion unit (A) in which a dispersion vessel (a) contains media (b) as dispersing media and a rapidly rotating stirrer (c) disperses agglomerated particles by allowing the media to collide each other in a high-speed rotating field; and then removing the solvent (B).

12. A liquid crystal display cell sealed with a cured product of the sealing material for liquid crystals according to any of claims 1 to 10.

**13.** A method for producing a liquid crystal display cell composed of two substrates, **characterized by** comprising adding a liquid crystal dropwise inside the weir of the sealing material for liquid crystals according to any of claims 1 to 10 formed on one substrate, bonding the other substrate, and then curing the sealing material by light and/or heat.

**14.** A method for producing a liquid crystal display cell composed of two substrates, **characterized by** comprising bonding two substrates with the sealing material for liquid crystals according to any of claims 1 to 10, curing the sealing material by light and/or heat to form a cell, injecting a liquid crystal, and then sealing an injecting port with an end sealing material.

## INTERNATIONAL SEARCH REPORT

International application No. PCT/JP2005/004304

A. CLASSIFICATION OF SUBJECT MATTER
Int.Cl$^7$ G02F1/1339, C09K3/10

According to International Patent Classification (IPC) or to both national classification and IPC

B. FIELDS SEARCHED

Minimum documentation searched (classification system followed by classification symbols)
Int.Cl$^7$ G02F1/1339, C09K3/10

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2005 |
| Kokai Jitsuyo Shinan Koho | 1971-2005 | Toroku Jitsuyo Shinan Koho | 1994-2005 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP 2004-59372 A (Baraito Kogyo Kabushiki Kaisha), 26 February, 2004 (26.02.04), Claims 1 to 4; Par. Nos. [0017] to [0019], [0031], [0050], [0053], [0060] (Family: none) | 1-14 |
| Y | JP 2004-61925 A (Nippon Kayaku Co., Ltd.), 26 February, 2004 (26.02.04), Claims 1 to 3; Par. Nos. [0030], [0040] (Family: none) | 1-6,10-14 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| | |
|---|---|
| Date of the actual completion of the international search: 18 May, 2005 (18.05.05) | Date of mailing of the international search report: 07 June, 2005 (07.06.05) |
| Name and mailing address of the ISA/ Japanese Patent Office | Authorized officer |
| Facsimile No. | Telephone No. |

Form PCT/ISA/210 (second sheet) (January 2004)

**INTERNATIONAL SEARCH REPORT**

International application No.
PCT/JP2005/004304

C (Continuation). DOCUMENTS CONSIDERED TO BE RELEVANT

| Category* | Citation of document, with indication, where appropriate, of the relevant passages | Relevant to claim No. |
|---|---|---|
| Y | JP 9-236809 A (Mitsui Toatsu Chemicals, Inc.), 09 September, 1997 (09.09.97), Claims 1 to 3; Par. Nos. [0019] to [0020], [0027], [0045] & US 5908899 A1 & EP 0781809 A3 & CN 1158869 A & KR 0225221 B | 1-3,7-14 |

Form PCT/ISA/210 (continuation of second sheet) (January 2004)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 3162179 B
- JP 2001133794 A
- JP 3366203 B